(19) **Europäisches Patentamt / European Patent Office / Office européen des brevets**

(11) **EP 4 358 612 A1**

(12) # EUROPEAN PATENT APPLICATION
published in accordance with Art. 153(4) EPC

(43) Date of publication:
**24.04.2024 Bulletin 2024/17**

(21) Application number: **21946102.7**

(22) Date of filing: **18.06.2021**

(51) International Patent Classification (IPC):
**H04W 72/04** (2009.01)

(52) Cooperative Patent Classification (CPC):
**H04W 72/04**

(86) International application number:
**PCT/JP2021/023273**

(87) International publication number:
**WO 2022/264428 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **ECHIGO, Haruhi**
  **Tokyo 100-6150 (JP)**
• **HARADA, Hiroki**
  **Tokyo 100-6150 (JP)**
• **KURITA, Daisuke**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, AND RADIO COMMUNICATION METHOD**

(57) This terminal is provided with: a control unit which multiplies a second size of an information block to be transmitted over a physical uplink shared channel in one time resource unit by a factor, to determine a first size of an information block to be transmitted using a transmission method for transmitting information via a physical uplink shared channel straddling a plurality of time resource units; and a transmitting unit for transmitting an information block having the first size in a plurality of time resource units.

200

FIG. 4

EP 4 358 612 A1

**Description**

Technical Field

The present disclosure relates to a terminal and a radio communication method.

Background Art

Long Term Evolution (LTE) has been specified for achieving a higher data rate, lower delay, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

For example, in NR, a method of processing a block of information (for example, a transport block (TB)) to be transmitted through a plurality of radio resources (for example, a physical uplink shared channel allocated to a plurality of slots) has been studied (Non-Patent Literature (hereinafter referred to as "NPL") 2).

Citation List

Non-Patent Literature

NPL 1
"New WID on NR coverage enhancements", RP-202928, 3GPP TSG RAN meeting #90e, 3GPP, December 2020
NPL 2
"RANI Chairman's Notes", 3GPP TSG RAN WG1 Meeting #104-e e-Meeting, 3GPP, February 2021

Summary of Invention

Technical Problem

There is room for consideration regarding a method of determining an appropriate size of a block of information to be transmitted through a plurality of radio resources.

An aspect of the present disclosure is to provide a terminal and a radio communication method each capable of determining an appropriate size of a block of information to be transmitted through a plurality of radio resources.

A terminal according to an aspect of the present disclosure includes: a control section that determines a first size of an information block to be transmitted in a transmission scheme, by multiplying a second size of the information block to be transmitted through a physical uplink shared channel in one time resource unit by a coefficient, where the transmission scheme is a transmission scheme in which information is transmitted through the physical uplink shared channel over a plurality of the time resource units; and a transmission section that transmits the information block having the first size in the plurality of time resource units.

A radio communication method according to an aspect of the present disclosure includes: determining a first size of an information block to be transmitted in a transmission scheme, by multiplying a second size of the information block to be transmitted through a physical uplink shared channel in one time resource unit by a coefficient, where the transmission scheme is a transmission scheme in which information is transmitted through the physical uplink shared channel over a plurality of the time resource units; and transmitting the information block having the first size in the plurality of time resource units.

Brief Description of Drawings

FIG. 1 illustrates examples of PUSCH allocation by TBoMS;
FIG. 2 illustrates an example of a radio communication system according to an embodiment;
FIG. 3 is a block diagram illustrating an example of a configuration of a base station according to the embodiment;
FIG. 4 is a block diagram illustrating an example of a configuration of a terminal according to the embodiment;
FIG. 5 illustrates an example of determination method 1;

FIG. 6 illustrates an example of TBoMS repeated transmissions;
FIG. 7A illustrates an example of bit selection of selection method 1 of transmission method 2;
FIG. 7B illustrates an example of the bit selection of selection method 1 of transmission method 2;
FIG. 8 illustrates examples of the relationship between a RV id and a TBoMS transmission occasion;
FIG. 9A illustrates an example of bit selection of transmission method 3;
FIG. 9B illustrates an example of the bit selection of transmission method 3; and
FIG. 10 illustrates an example of hardware configurations of the base station and of the terminal according to the embodiment.

Description of Embodiments

<Knowledge Leading to the Present Disclosure>

For example, in 3GPP Release-17, it has been agreed to consider coverage enhancement (CE) in NR (NPL 1).
It has also been agreed with respect to the coverage enhancement to consider a determination method of a time resource of TB processing over multi-slot (TBoMS) PUSCH in which a transport block (TB) is processed through a physical uplink shared channel, specifically a PUSCH (Physical Uplink Shared Channel) allocated to a plurality of slots (NPL 2).
TBoMS may be interpreted as a technique of transmitting one transport block by using a plurality of slots.

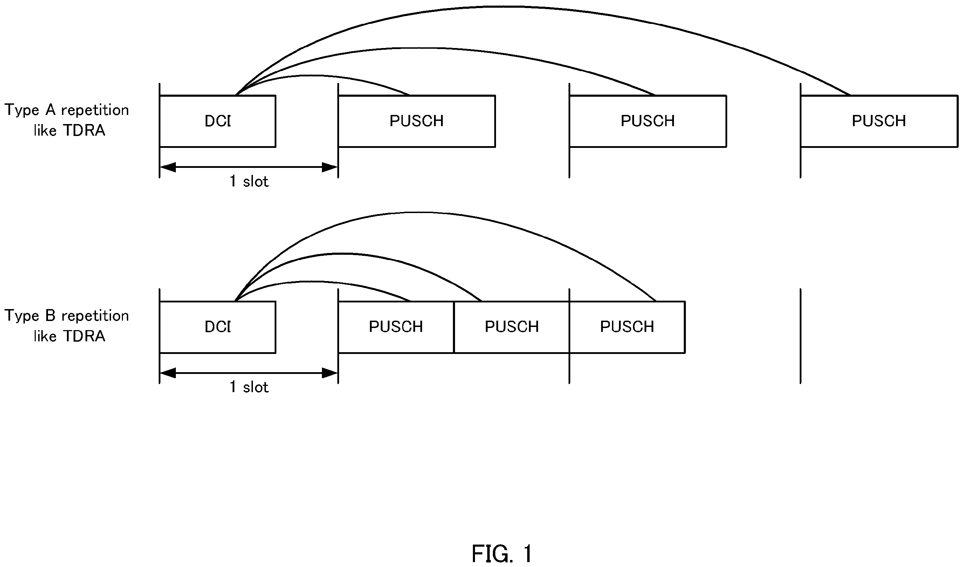

FIG. 1 illustrates examples of PUSCH allocation by TBoMS. Specifically, FIG. 1 illustrates examples of PUSCH allocation by TBoMS in accordance with Type A repetition like TDRA (Time Domain Resource Allocation) and Type B repetition like TDRA. Note that, Types A and B may mean Repetition types A and B.
TBoMS may have the following advantages.

· A coding rate (code rate) decreases since a resource is allocated over a plurality of slots.
· A gain of channel coding improves by an increased code sequence.
· The length of a header of a higher layer can be reduced in comparison with transmission of a plurality of TBs.

Further, in 3GPP Release-15 or the like, in a case where a size of a TB (TBS) to be transmitted through a PUSCH (a PDSCH as well) is determined, the number of REs ($N_{RE}$) is first calculated, and thereafter the number of information bits ($N_{info}$) is calculated by using the calculated $N_{RE}$. The TBS is then determined based on the calculated $N_{info}$. Here, the TBS determination assumes that a PUSCH is allocated to one slot.
In the case of TBoMS, however, it is desirable to determine a TBS in accordance with a PUSCH to be allocated over a plurality of slots (which may be contiguous). For example, determining an appropriate TBS makes it possible to achieve a designated target code rate even at the time of TBoMS transmission. In other words, determining an appropriate TBS makes it possible to bring an actual code rate at the time of TBoMS transmission closer to a designated target code rate. Further, determining an appropriate TBS makes it possible to improve efficiency of coverage enhancement by TBoMS.
Accordingly, in the present embodiment, TBS determination in accordance with TBoMS in which a PUSCH to be allocated over a plurality of slots is used will be described as an example.

<Example of Radio Communication System>

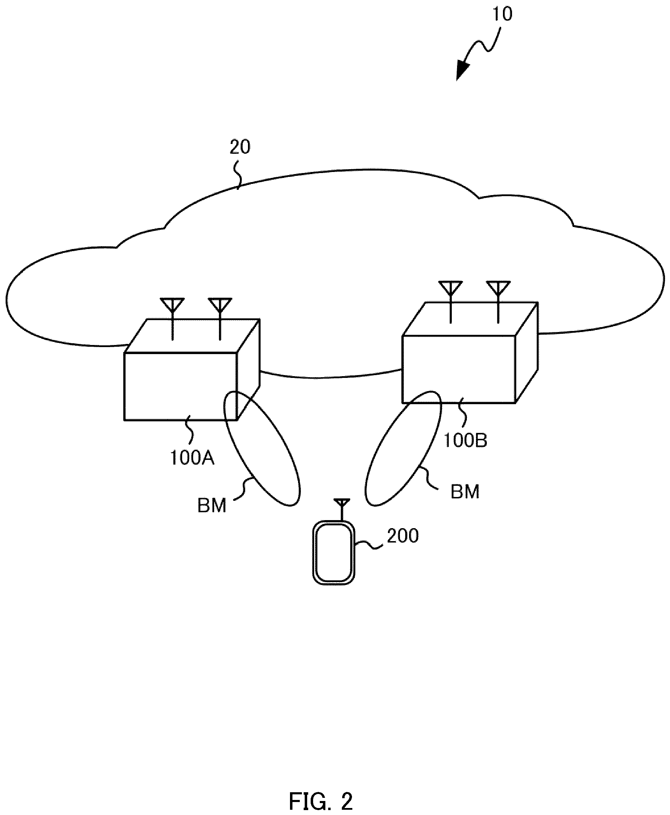

FIG. 2 illustrates an example of radio communication system 10 according to the embodiment. Radio communication system 10 may be a radio communication system in accordance with New Radio (NR). Radio communication system 10 includes a Next Generation-Radio Access Network 20 (hereinafter referred to as NG-RAN 20) and terminal 200.
Note that, radio communication system 10 may be a radio communication system in accordance with a scheme called 5G, Beyond 5G, 5G Evolution or 6G.
NG-RAN 20 includes base stations 100 (base station 100A and base station 100B). Note that, the number of base stations 100 and the number of terminals 200 are not limited to the example indicated in FIG. 2.
NG-RAN 20 includes a plurality of NG-RAN Nodes, specifically a plurality of gNBs (or ng-eNBs), is connected to a core network (5GC, not illustrated) in accordance with 5G. Note that, NG-RAN 20 and the 5GC may be simply represented as "network".
Base station 100 may be referred to as an NG-RAN Node, an ng-eNB, an eNodeB (eNB), or a gNodeB (gNB). Terminal 200 may be referred to as a User Equipment (UE). Further, base station 100 may be regarded as an apparatus included in a network to which terminal 200 is connected.
Base station 100 executes radio communication with terminal 200. For example, the radio communication to be executed follows NR. By controlling radio signals transmitted from a plurality of antenna elements, at least one of base station 100 and terminal 200 may support Multiple-Input Multiple-Output (Massive MIMO) that generates a beam (BM) having higher directivity. Further, at least one of base station 100 and terminal 200 may support carrier aggregation (CA) that aggregates and uses a plurality of component carriers (CC). Further, at least one of base station 100 and terminal 200 may support dual connectivity (DC) or the like in which communication between terminal 200 and each of a plurality of base stations 100 is performed.

Radio communication system 10 may support a plurality of frequency bands. For example, radio communication system 10 supports Frequency Range (FR) 1 and FR 2. The frequency bands of the respective FRs are, for example, as follows.

·FR 1: 410 MHz to 7.125 GHz
·FR 2: 24.25 GHz to 52.6 GHz

In FR 1, a sub-carrier spacing (SCS) of 15 kHz, 30 kHz or 60 kHz may be used, and a bandwidth (BW) of 5 MHz to 100 MHz may be used. FR 2 is, for example, a frequency higher than FR 1. In FR 2, an SCS of 60 kHz or 120 kHz may be used and a bandwidth (BW) of 50 MHz to 400 MHz may be used. FR 2 may also include an SCS of 240 kHz.

Radio communication system 10 in the present embodiment may support a frequency band higher than the frequency band of FR 2. For example, radio communication system 10 in the present embodiment may support a frequency band exceeding 52.6 GHz and up to 114.25 GHz.

Further, Cyclic Prefix-Orthogonal Frequency Division Multiplexing (CP-OFDM)/Discrete Fourier Transform-Spread-Orthogonal Frequency Division Multiplexing (DFT-S-OFDM) having a sub-carrier spacing (SCS) larger than those in the examples described above may be applied. Further, DFT-S-OFDM may be applied to both uplink and downlink or may be applied to one thereof.

In the radio communication system, coverage enhancement (CE) that enhances the coverage of a cell (which may also be a physical channel) formed by base station 100 may be supported. In the coverage enhancement, a mechanism for increasing the reception success rates of various physical channels may be provided.

For example, base station 100 supports repeated transmissions of downlink signals (for example, signals using a PDSCH (Physical Downlink Shared Channel)). For example, terminal 200 supports repeated transmissions of uplink signals (for example, a PUSCH (Physical Uplink Shared Channel)).

In the radio communication system, a Time Division Duplex (TDD) slot configuration pattern may be configured. For example, DDDSU (D: downlink (DL) symbol, S: DL/uplink (UL) or guard symbol, U: UL symbol) may be prescribed (see 3GPP TS 38.101-4).

Further, in the radio communication system, it is possible to execute PUSCH (or PUCCH (Physical Uplink Control Channel)) channel estimation by using a demodulation reference signal (DMRS) per slot, but it is further possible to execute PUSCH (or PUCCH) channel estimation by using DMRSs allocated to a plurality of slots, respectively. Such channel estimation may be referred to as joint channel estimation or may be referred to as another name, such as cross-slot channel estimation.

Terminal 200 may transmit DMRSs allocated to (over) a plurality of slots such that base station 100 can execute joint channel estimation using DMRSs.

Further, in the radio communication system, TB processing over multi-slot PUSCH (TBoMS) in which a transport block (TB) is processed through a PUSCH allocated to a plurality of slots may be applied to the coverage enhancement.

In TBoMS, the number of assigned symbols may be the same in each slot as in Time Domain Resource Allocation (TDRA) of PUSCH Repetition type A or the number of symbols assigned to each slot may be different as in TDRA of PUSCH Repetition type B (details thereof will be described later).

The TDRA may be interpreted as resource allocation in a PUSCH time domain prescribed in 3GPP TS 38.214. A PUSCH TDRA may be interpreted as being prescribed by an information element (IE) of a radio resource control layer (RRC), specifically PDSCH-Config or PDSCH-ConfigCommon.

Further, the TDRA may also be interpreted as resource allocation in a PUSCH time domain, which is designated by downlink control information (DCI).

Note that, configurations of base station 100 and terminal 200 described below illustrate an example of functions related to the present embodiment. Base station 100 and terminal 200 may have functions that are not illustrated. Further, the function classification and/or the name of the functional section are/is not limited as long as the functions serve for executing the operations according to the present embodiment.

<Configuration of Base Station>

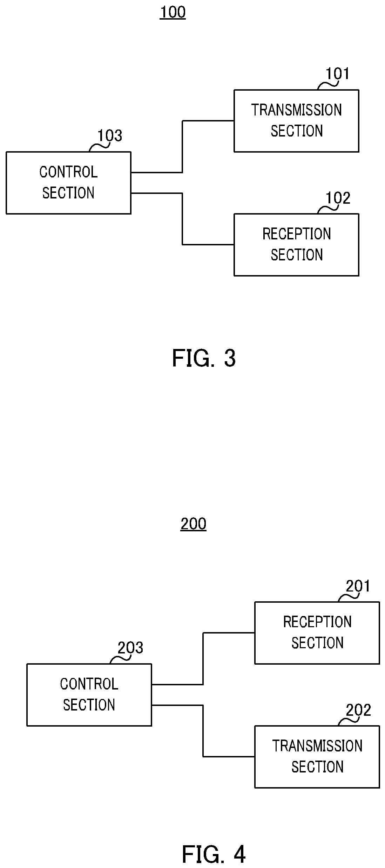

FIG. 3 is a block diagram illustrating an example of a configuration of base station 100 according to the present embodiment. Base station 100 includes, for example, transmission section 101, reception section 102, and control section 103. Base station 100 communicates wirelessly with terminal 200 (see FIG. 4).

Transmission section 101 transmits a downlink (DL) signal to terminal 200. For example, transmission section 101 transmits the DL signal under the control of control section 103.

The DL signal may include, for example, a downlink data signal and control information (for example, Downlink Control Information (DCI)). Further, the DL signal may include information indicating scheduling relating to signal transmission of terminal 200 (for example, an UL grant). Further, the DL signal may include higher layer control information (for example, control information of Radio Resource Control). Further, the DL signal may include a reference signal.

Channels used for DL signal transmission include, for example, data channels and control channels. For example, the data channels may include a PDSCH (Physical Downlink Shared Channel) and the control channels may include a PDCCH (Physical Downlink Control Channel). For example, base station 100 transmits control information to terminal 200 by using a PDCCH and transmits a downlink data signal by using a PDSCH.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulating a downlink data signal and is transmitted by using a PDSCH.

Reception section 102 receives an uplink (UL) signal transmitted from terminal 200. For example, reception section 102 receives the UL signal under the control of control section 103.

Control section 103 controls communication operations of base station 100 including transmission processing of transmission section 101 and reception processing of reception section 102.

For example, control section 103 acquires data and information such as control information from a higher layer, and outputs the data and information to transmission section 101. Further, control section 103 outputs the data, control information and/or the like received from reception section 102 to a higher layer.

For example, in a case where terminal 200 determines that TBoMS is applied, control section 103 performs control such that control information on TBoMS application is transmitted to terminal 200.

For example, in a case where terminal 200 transmits an uplink signal to which TBoMS is applied, control section 103 controls the reception of the uplink signal to which TBoMS is applied. For example, control section 103 causes PUSCH signals in a plurality of slots to be received and causes a transport block to be formed.

<Configuration of Terminal>

FIG. 4 is a block diagram illustrating an example of a configuration of terminal 200 according to the present embodiment. Terminal 200 includes, for example, reception section 201, transmission section 202, and control section 203. Terminal 200 communicates wirelessly with, for example, base station 100.

Reception section 201 receives a DL signal transmitted from base station 100. For example, reception section 201 receives the DL signal under the control of control section 203.

Transmission section 202 transmits an UL signal to base station 100. For example, transmission section 202 transmits the UL signal under the control of control section 203.

The UL signal may include, for example, an uplink data signal and control information. For example, the UL signal may include information on processing capabilities of terminal 200 (for example, UE capability). Further, the UL signal may include a reference signal.

Channels used for UL signal transmission include, for example, data channels and control channels. For example, the data channels include a PUSCH (Physical Uplink Shared Channel) and the control channels include a PUCCH (Physical Uplink Control Channel). For example, terminal 200 receives control information from base station 100 by using a PUCCH and transmits an uplink data signal by using a PUSCH.

The reference signal included in the UL signal may include, for example, at least one of a DMRS, a PTRS, a CSI-RS, an SRS, and a PRS. For example, the reference signal such as the DMRS and the PTRS is used for demodulating an uplink data signal and is transmitted by using a PUSCH.

Control section 203 controls communication operations of terminal 200 including reception processing in reception section 201 and transmission processing in transmission section 202.

For example, control section 203 acquires data and information such as control information from a higher layer, and outputs the data and control information to transmission section 202. Further, control section 203 outputs, for example, the data, control information and/or the like received from reception section 201 to a higher layer.

For example, in a case where terminal 200 applies TBoMS, control section 203 controls the transmission of an uplink signal to which TBoMS is applied. In this case, control section 203 may control, based on control information acquired from base station 100, the transmission of the signal to which TBoMS is applied. For example, control section 203 determines a transport block size (TBS) for transmission with TBoMS and performs control such that a TB having the determined TBS is transmitted by using a PUSCH in a plurality of slots.

Note that, the channels used for DL signal transmission and the channels used for UL signal transmission are not limited to the examples described above. For example, the channels used for DL signal transmission and the channels used for UL signal transmission may include a RACH (Random Access Channel) and a PBCH (Physical Broadcast Channel). The RACH may be used, for example, to transmit Downlink Control Information (DCI) including a Random Access Radio Network Temporary Identifier (RA-RNTI).

<Regarding TBS Determination>

Hereinafter, TBS determination in accordance with a TB over a plurality of slots will be described. For example, at least one of the following three TBS computation methods may be applied to the TBS determination.

<TBS Computation Method 1>

When the number of REs ($N_{RE}$) is calculated, enhancement not to the number of REs in one slot, but to the number of REs in a plurality of slots is performed.
For example, $N_{RE}$ ($N'_{RE}$) may be calculated as in following equation 1.

$$ N'_{RE} = N_{sc}^{RB} \cdot N_{symb}^{sh} - N_{DMRS}^{PRB} - N_{oh}^{PRB} \qquad \text{... (Equation 1).} $$

In equation 1, $N_{SC}^{RB}$ indicates the number of subcarriers per resource block, $N_{symb}^{sh}$ indicates the number of symbols in a slot unit, $N_{DMRS}^{PRB}$ indicates the number used for a DMRS in a slot unit, and $N_{oh}^{PRB}$ indicates the number of overheads. Here, each variable may be changed to the number of REs over a plurality of slots.
In this case, $N_{oh}^{PRB}$ of equation 1 may be calculated by one of those described below, for example.

·(Opt 1): the same $N_{oh}^{PRB}$ is configured in all slots.

·(Opt 1-1): xOverhead configured by PDSCH-ServingCellConfig is assigned to each slot).
·(Opt 1-2): a value obtained by dividing xOverhead configured by PDSCH-ServingCellConfig by the number of slots to which TBoMS is applied is configured as $N_{oh}^{PRB}$ in each slot.

In this case, the quotient may be rounded to an integer by a ceil or floor.

·(Opt 1-3): a new parameter is added and, when TBoMS is used, $N_{oh}^{PRB}$ is determined based on the parameter.
·(Opt 1-4): a new parameter is added and, when TBoMS is used, $N_{oh}^{PRB}$ is determined based on the parameter and xOverhead.

·(Opt 2): $N_{oh}^{PRB}$ is configured based on the number of slots and/or the number of symbols both of which TBoMS is applied.

·(Opt 2-1): xOverhead is multiplied by the number of slots to which a resource is allocated (Type A repetition like TDRA).
·(Opt 2-2): xOverhead is multiplied by the number of repeated transmissions (the number of repetitions) (Type B repetition like TDRA).

·(Opt 2-2-1): xOverhead is multiplied by an actual repetition number.

In this case, multiplication by the number of actual repetitions that are not subjected to segmentation may be performed.

·(Opt 2-2-2): multiplication by a nominal repetition number is performed.

·(Opt 2-3): calculation is performed in accordance with a SLIV in TDRA, the number of symbols to be assigned, the total number of assigned symbols, and xOverhead.

For example, calculation may be performed by (xOverhead) $\times$ (the total number of symbols)/(a SLIV in TDRA and the number of symbols to be assigned).

Further, in Opts 2-1, 2-2, and 2-3, a different parameter configured by PDSCH-ServingCellConfig may be used instead of xOverhead. For example, $N^{PRB}_{oh}$ may be calculated based on an added parameter, xOverhead, and both the number of slots and the number of symbols. In this case, separate parameters may be configured when TBoMS is applied and when TBoMS is not applied.

Further, one of those described below may be applied to the calculation of $N^{sh}_{symb}$ ($N^{PRB}_{DMRS}$) in equation 1.

·(Alt 1): a change to the number of symbols (REs) in all resources, to which the resources are allocated, is performed.

In this case, the number of symbols (REs) may be calculated in consideration of a TDD pattern, SFI, and CI.

·(Alt 2): multiplication by the number of slots to which resources are allocated is performed (Type A repetition like TDRA).
·(Alt 3): multiplication by the number of repetitions is performed (Type B repetition like TDRA).

·(Opt 1): multiplication by an actual repetition number is performed.

In this case, multiplication by the number of actual repetitions that are not subjected to segmentation may be performed.

·(Opt 2): multiplication by a nominal repetition number is performed.

<TBS Computation Method 2>

$N_{RE}$ is calculated based on a SLIV in TDRA and $N_{info}$ is calculated in accordance with the TDRA. One of the following methods may be applied to computation method 2.

·(Alt 1): in the case of Type A repetition like TDRA, $N_{RE}$ in one slot is calculated and is multiplied by the number of repetitions when $N_{info}$ is calculated. In this case, the number of slots may be calculated in consideration of slots to be dropped (multiplication by the number of slots that can be allocated is performed). In a case where a TDD pattern, SFI (Slot Format Indication)/CI (Cancel Indication), and/or the like are/is present, a value notified by a TBS to be transmitted or received may be changed.
·(Alt 2): in the case of Type B repetition like TDRA, $N_{RE}$ of one Repetition is calculated and is multiplied by the number of repetitions when $N_{info}$ is calculated. Here, the following two Options may be applied.
·(Opt 1): multiplication by an actual repetition number is performed. In this case, multiplication by the number of actual repetitions that are not subjected to segmentation may be performed.
·(Opt 2): multiplication by a nominal repetition number is performed.

Note that, the actual repetition may be interpreted as a repetition to be ultimately transmitted, and the nominal repetition may be interpreted as a repetition of which the base station notifies the terminal or which is assigned to the terminal by the base station. For example, the actual repetition and the nominal repetition may vary depending on factors as described below.

(i) in a case where a nominal repetition is not mapped in a UL symbol, the nominal repetition may be excluded.
(ii) in a case where a nominal repetition is mapped at a slot boundary, the nominal repetition may be subjected to segmentation at the slot boundary and may be changed to two actual repetitions.

<TBS Computation Method 3>

A predetermined parameter is added. For example, the parameter may be notified by utilizing DCI and/or higher layer signaling.

For example, as indicated in following equation 2, predetermined parameter (K) may be added when the value of $N_{info}$ is calculated. For example, K may be a value for multiplying $N_{info}$ by K (a scaling factor), but is not necessarily limited to such a purpose. Further, the scaling factor may also be referred to as a scaling value.

$$N_{\inf o} = N_{RE} \cdot R \cdot Q_m \cdot \upsilon \cdot K$$

... (Equation 2).

In equation 2, $N_{RE}$ indicates the number of REs, R indicates the coding rate, Qm indicates the modulation multi-level number, and v indicates the number of layers in MIMO. For example, the right side of equation 2 indicates that a size of a TB to be transmitted through a PUSCH in one slot is multiplied by scaling factor K. In other words, in equation 2, a TBS in TBoMS transmission is computed by multiplying the size of the TB to be transmitted in the PUSCH in one slot by scaling factor K.

For example, in the example of equation 2, a scaling factor may be added in the computation of $N_{info}$, but the present disclosure is not limited thereto. For example, a scaling factor may be applied to the number of REs assigned in one slot. For example, the number of REs assigned in one slot may be multiplied by K by the scaling factor. Further, the scaling factor may be applied to a quantized intermediate variable. For example, quantized intermediate variable $N_{info'}$ may be multiplied by K by the scaling factor.

Scaling factor K may be an integer larger than 1. Hereinafter, a scaling factor determination method will be described. Note that, scaling factor determination may be interpreted as an example of TBS determination.

The scaling factor may be determined, for example, based on at least one of the following determination methods.

In determination method 1, the scaling factor is determined based on at least one of the number designated as the number of slots to which TBoMS allocation is performed and the number of slots to which TBoMS allocation is possible.

In determination method 2, the scaling factor is determined based on RRC and/or a MAC CE.

In determination method 3, the scaling factor is determined based on DCI.

In determination method 4, the scaling factor is determined based on notified information and the number of allocated slots.

In determination method 5, a method to be applied among determination methods 1 to 4 described above is configured by control information (for example, RRC).

In determination method 6, information on capabilities of the terminal (for example, UE capability) with respect to applicability of determination methods 1 to 5 described above is notified.

Next, each of determination methods 1 to 6 described above will be specifically described.

(Determination Method 1: Determination based on Number of Slots for TBoMS)

For example, the terminal determines the scaling factor based on at least one of the number designated as the number of slots to which TBoMS allocation is performed and the number of slots to which TBoMS allocation is possible. For example, the scaling factor is determined based on Examples 1-1 to 1-4 of Method below.

(Example 1-1 of Method)

The terminal determines, as the scaling factor, the number designated as the number of slots to which TBoMS allocation is performed, where the designated number is indicated in each row index of a TDRA list configured by RRC. Note that, "the number designated as the number of slots to which TBoMS allocation is performed" may correspond to "the number of (candidate) slots to which TBoMS allocation is performed". "The number designated as the number of slots to which TBoMS allocation is performed" may correspond to the number of slots configured (designated) by control information (for example, RRC and/or DCI).

Note that, in Example 1-1, a repetition number (the number of repetitions) indicated in a TDRA list may be determined as the number designated as the number of slots to which TBoMS allocation is performed. In other words, a repetition number indicated in a TDRA list may be utilized (or reutilized) as the number designated as the number of slots to which TBoMS allocation is performed. In this case, the terminal may determine, based on information according to communication control, which of TBoMS and repetition is applied to execute signal transmission. For example, the information according to communication control may be configured by at least one of RRC, a MAC CE, DCI and UE capability. In this case, the terminal may execute scaling using the scaling factor with respect to TBS determination in a case where TBoMS is applied. In this case, the terminal may not execute scaling using the scaling factor in a case where TBoMS is not applied (for example, in a case where repetition is applied).

(Example 1-2 of Method)

The number of slots to which TBoMS allocation is possible, where the number of slots is determined based on information on RRC configuration and/or DCI for performing TBoMS allocation, is determined as the scaling factor. Note that, "the number of slots to which TBoMS allocation is possible" may be determined based on the number designated as the number of slots to which TBoMS allocation is performed (the number of slots configured by control information) and the number of slots to which TBoMS allocation is impossible due to overlapping with other resources or the like. For example, "the number of slots to which TBoMS allocation is possible" is a number equal to or fewer than the number designated as the number of slots to which TBoMS allocation is performed (the number of slots configured by control information). "The number of slots to which TBoMS allocation is possible" may be a number obtained by subtracting the number of slots to which TBoMS allocation is impossible due to overlapping with other resources or the like from the number designated as the number of slots to which TBoMS allocation is performed. For example, in a case where the number designated as the number of slots to which TBoMS allocation is performed by DCI is configured to be four and one slot of the configured four slots is designated for DL, the number of slots to which TBoMS allocation is possible is three.

For example, the number of slots in which an SRS triggered in the same DCI as DCI that assigns a downlink symbol and/or a PUSCH in a TDD pattern such as TDD-UL-DL-Configcommon and TDD-UL-DL-ConfigurationDedicated does not overlap with a PUSCH resource may be determined as the scaling factor.

(Example 1-3 of Method)

The number of slots to which TBoMS allocation is possible, where the number of slots is determined based on a signal received prior to DCI for performing TBoMS allocation, is determined as the scaling factor. For example, a signal received prior to DCI may consider RRC, UL CI (Cancel Indication), and dynamic SFI (Slot Format Indication) in DCI format 2-0.

(Example 1-4 of Method)

The number of slots to which TBoMS allocation is possible, where the number of slots is determined based on a signal received prior to a first slot through which TBoMS transmission is performed, is determined as the scaling factor. For example, a signal received prior to a first slot through which TBoMS transmission is performed may consider RRC, UL CI, and dynamic SFI in DCI format 2-0.

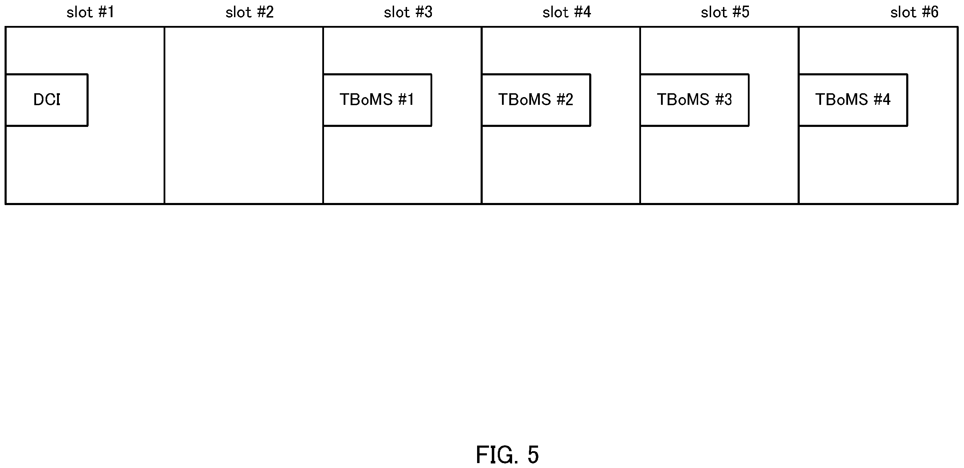

Example 1-3 of Method and Example 1-4 of Method will be described with reference to FIG. 5 as an example.

FIG. 5 illustrates an example of determination method 1. In the example of FIG. 5, slots #1 to #6 are indicated, DCI is transmitted in slot #1, and TBoMS transmission is executed in each slot of slots #3 to #6. The DCI in slot #1 includes information on TBoMS allocation. In other words, the DCI in slot #1 performs TBoMS allocation. Further, in the example of FIG. 5, the first slot through which TBoMS transmission is performed is slot #3.

Since the DCI that performs TBoMS allocation is the DCI in slot #1 in Method 1-3, the number of slots to which TBoMS allocation is possible is determined based on a signal received prior to the DCI in slot #1. Then the determined number of slots to which the allocation is possible is determined as the scaling factor.

Since the slot through which TBoMS transmission is first performed is slot #3 in Example 1-4 of Method, the number of slots to which TBoMS allocation is possible is determined based on a signal received prior to slot #3. Then the determined number of slots to which the allocation is possible is determined as the scaling factor.

Note that, although the number designated as the number of slots to which TBoMS allocation is performed or the number of slots to which TBoMS allocation is possible is the scaling factor in Examples 1-1 to 1-4 of Method described above, the present disclosure is not limited thereto. A value obtained by predetermined processing based on the number designated as the number of slots to which TBoMS allocation is performed or the number of slots to which TBoMS allocation is possible may be determined as the scaling factor. For example, the scaling factor may be a value obtained by dividing X from the number designated as the number of slots to which TBoMS allocation is performed or the number of slots to which TBoMS allocation is possible. In this case, X may be configured by a predetermined rule or may be configured by RRC.

Further, in Examples 1-2 to 1-4 of Method described above, a scheduling signal for another carrier may be considered. For example, a scheduling signal with respect to CA (Carrier Aggregation) may be considered.

(Determination Method 2: Determination based on RRC and/or MAC CE)

For example, the terminal determines the scaling factor based on RRC configuration and/or a MAC (Media Access Control) CE (Control element).

(Example 2-1 of Method: Determination based on RRC Configuration)

For example, a parameter for configuring the scaling factor may be added to PUSCH-Config IE of RRC. The terminal may determine the scaling factor based on the parameter added to PUSCH-Config IE of RRC. Note that, in this case, the scaling factor determined based on RRC configuration may also be configured in accordance with the number designated as the number of slots to which TBoMS allocation is performed and/or the number of slots to which TBoMS allocation is possible. For example, the scaling factor may be configured when the number designated as the number of slots to which TBoMS allocation is performed is "1" and when the number designated as the number of slots to which TBoMS allocation is performed is "2", respectively. For example, the parameter to be added to PUSCH-Config IE of RRC may be configured in accordance with the number designated as the number of slots to which TBoMS allocation is performed. For example, the number designated as the number of slots to which TBoMS allocation is performed may be associated with the scaling factor or the parameter for configuring the scaling factor.

(Example 2-2 of Method: Determination based on MAC CE)

For example, a parameter designated by a MAC CE may be determined as the scaling factor to be used in TBS determination. In other words, a scaling factor designated by a MAC CE may be applied.
Further, the scaling factor designated by a MAC CE may be configured in accordance with the number designated as the number of slots to which TBoMS allocation is performed. For example, the scaling factor configured in accordance with the number designated as the number of slots to which TBoMS allocation is performed may be designated by a MAC CE. For example, the number designated as the number of slots to which TBoMS allocation is performed may be associated with the scaling factor or a parameter for configuring the scaling factor.
The scaling factor configured by RRC may be subjected to activation or deactivation by a MAC CE. In other words, it may be configured by a MAC CE whether the scaling factor configured by RRC is used. Alternatively, candidates for the scaling factor may be configured by RRC and the scaling factor to be applied among the candidates may be configured by a MAC CE. In this case, the scaling factor configured by RRC and subjected to activation or deactivation by the MAC CE may be configured in accordance with the number designated as the number of slots to which TBoMS allocation is performed.

(Determination Method 3: Determination based on DCI)

For example, the terminal determines the scaling factor based on DCI. For example, the scaling factor may be notified by a region (for example, a bit field) that stores information included in DCI.

(Example 3-1 of Method: Determination based on FDRA Bit Field)

For example, the scaling factor may be notified by a frequency domain resource allocation (FDRA) bit field. One or more bits of an FDRA field may be used to notify the scaling factor. In this case, the number of RBs in the case of TBoMS transmission may be limited. Bits to be used for notifying the scaling factor may be ensured by the RB limitation. Further, only Uplink resource allocation type 1 or/and 2 may be applicable in frequency allocation.

(Example 3-2 of Method: Determination based on TDRA Bit Field)

For example, the scaling factor may be notified by a TDRA bit field. The scaling factor corresponding to each row index of a TDRA list may be configured by a predetermined rule and/or RRC configuration. Then the scaling factor configured in a row index designated by a TDRA field may be used. For example, the scaling factor may be configured to PUSCH-Allocation of PUSCH-TimeDomainResourceAllocation IE. In a TDRA bit field, the scaling factor may be configured apart from the number designated as the number of slots to which TBoMS allocation is performed.

(Example 3-3 of Method: Determination based on MCS Bit Field)

For example, the scaling factor may be notified based on a modulation and coding scheme (MCS) bit field. For example, one or more bits of an MCS bit field may indicate an MCS and the remaining one or more bits may indicate the scaling factor. For example, one or more higher-order bits of an MCS bit field may indicate an MCS, and the remaining one or more lower-order bits may indicate the scaling factor. For example, one or more lower-order bits of an MCS bit field may indicate an MCS, and the remaining one or more higher-order bits may indicate the scaling factor. For example, three higher-order (or lower-order) bits of an MCS bit field may be used for notification of an MCS, and two lower-order (or higher-order) bits may be used for notification of the scaling factor.

Note that, in a case where the scaling factor is notified based on an MCS bit field, MCSs that are selectable in TBoMS transmission may be limited. Bits to be used for notifying the scaling factor may be ensured by the limitation of selectable MCSs.

For example, an MCS index with a lower index (for example, with a lower spectral efficiency) may be selectable in a predetermined MCS table indicating the relationship between a plurality of MCSs and indices associated with the respective MCSs. In this case, an MCS index with a higher index (for example, with a higher spectral efficiency) may be limited. For example, in a case where three bits are used for MCS notification, eight MCS indices with a lower index may be selectable.

Note that, the example in which an MCS index with a lower index (for example, with a lower spectral efficiency) is selectable is not a sole example. For example, an MCS index with a higher index (for example, with a higher spectral efficiency) may be selectable and an MCS index with a lower index (for example, with a lower spectral efficiency) may be limited. Alternatively, the example in which an MCS index with a lower index or an MCS index with a higher index is selectable in an MCS table is not a sole example, and for example, an MCS index with an intermediate index may be selectable and MCSs with a low index and a high index may be limited. Alternatively, in an MCS table, selectable MCS indices and MCS indices to be limited may be randomly arranged, or selectable MCS indices or MCS indices to be limited may be arranged at equal intervals (for example, alternately). Selectable MCS indices and MCS indices to be limited may be fixed or may be changed statically or dynamically.

Note that, the predetermined MCS table described above may be regarded as, for example, an MCS table to be used when the scaling factor is not notified or may be regarded as an MCS table to be used when TBoMS transmission is not performed.

Note that, the example in which selectable MCS indices and MCS indices to be limited are configured in a predetermined MCS table is not a sole example. For example, an MCS table for TBoMS transmission may be configured, and the MCS table for TBoMS transmission may be referred to in TBoMS transmission. In other words, an MCS table in a case where TBoMS transmission is performed may be distinguished from an MCS table in a case where TBoMS is not performed (or in a case where the scaling factor is not notified).

Note that, although an example in which the scaling factor is notified by an FDRA bit field, a TDRA bit field or an MCS bit field in DCI has been described above, the scaling factor may be notified by a bit field different from these bit fields in DCI. Further, although an example in which the scaling factor is notified by one bid field has been described above, the scaling factor may be notified by a plurality of bit fields. For example, the scaling factor may be notified by a combination of the respective bits of a plurality of bit fields.

(Example 3-4 of Method: Variation)

Further, although an example in which the scaling factor is notified by an FDRA bit field, a TDRA bit field or an MCS bit field prescribed in DCI has been described above, a bit field for notifying the scaling factor may be prescribed in DCI. The scaling factor may be notified by a bit field for notifying the scaling factor (a bit field dedicated to the scaling factor).

The number of bits to be used for the notification of the scaling factor described above and the number of bit fields to be used for the notification of the scaling factor described above are exemplary, and the present disclosure is not limited thereto. For example, the number of bits and the number of bit fields may be fixed or may be configured dynamically or statically. For example, this configuration may be executed by control information of a higher layer.

(Determination Method 4: Determination based on Notified Information and Number of Allocated Slots)

For example, the terminal determines the scaling factor based on notified information and/or the number of allocated slots.

For example, in scaling factor determination, the terminal may determine the scaling factor by combining the number of slots to which a PUSCH is allocated and information configured by RRC and/or information notified by DCI.

For example, the number of slots to which a PUSCH is allocated is not particularly limited. The number of slots to which a PUSCH is allocated may correspond to "the number of slots to which TBoMS allocation is possible" or the "number designated as the number of slots to which TBoMS allocation is performed" indicated by determination method 1 described above. For example, the number of slots to which a PUSCH is allocated corresponds to the number of slots determined by at least one of Examples 1-1 to 1-4 of Method in determination method 1 described above.

Further, the information configured by RRC is not particularly limited. The information configured by RRC may correspond to the information indicated in determination method 2 described above.

Further, the information notified by DCI is not particularly limited. The information notified by DCI may correspond to the information indicated in determination method 3 described above.

For example, the scaling factor is determined by adding (or subtracting) notified information (for example, a value) to (or from) the number of slots to which a PUSCH is allocated. Alternatively, the scaling factor may be determined by dividing (or multiplying), by using notified information (for example, a value), the number of slots to which a PUSCH is allocated.

For example, a case where scaling factor-related information (for example, a scaling factor index) is notified by DCI will be described. The following table provides an example of the relationship between the scaling factor-related information and a scaling factor reference.

[Table 1]

Table 1: Relationship between Scaling Factor Index and Scaling Reference Value

| Scaling factor index | Scaling reference value |
|---|---|
| 0 | 0 |
| 1 | -1 |
| 2 | -2 |
| 3 | -3 |

For example, in a case where the scaling factor-related information (for example, a scaling factor index) is notified by DCI, the terminal may determine the scaling reference value in reference to Table 1 and add the number of slots to which a PUSCH is allocated and the scaling reference value to determine the scaling factor.

For example, in a case where TBoMS allocation is performed over four slots, the number of slots to which a PUSCH is allocated is four. Then, in a case where the scaling factor index is 1, the scaling reference value is "0" in reference to Table 1, and scaling factor K is K = 4 + 0. Further, in the same manner, in a case where the scaling factor index is 2, the scaling reference value is "-1" in reference to Table 1, and scaling factor K is K=4+(-1)=3.

(Determination Method 5: Scaling Factor-Related RRC Configuration)

For example, the terminal configures, by a predetermined rule and/or RRC, a method to be applied to scaling factor determination among determination methods 1 to 4 described above. In determination method 5, the terminal determines a method to be applied among determination methods 1 to 4, and determines the scaling factor by using the determined method.

(Example 5-1 of Method: Determination in accordance with UE Capability)

For example, the method to be applied to scaling factor determination may be determined based on UE capability. For example, the terminal reports, by the UE capability, information indicating a determination method supported by the terminal (for example, a determination method that can be used by the terminal). In a case where the terminal supports determination method 3, the terminal reports, by the UE capability, information indicating that the terminal supports determination method 3. Then the terminal is notified of a scaling factor based on determination method 3 and determines the scaling factor. In this case, the terminal that does not support determination method 3 may determine the scaling factor based on determination method 1 or 2. Note that, the terminal that supports a determination method(s) other than determination method 3 may report, by the UE capability, information indicating the determination method(s) to be supported by the terminal (for example, determination method(s) 1 and/or 2).

(Example 5-2 of Method: Determination in accordance with RRC Configuration)

For example, the method to be applied to scaling factor determination may be determined based on RRC configuration. For example, scaling factor-related information (for example, a parameter) may be configured in PUSCH-Config IE. The scaling factor-related information (for example, a parameter) may indicate at least one of determination methods 1 to 3. For example, the terminal may identify a determination method to be used based on the scaling factor-related information and determine the scaling factor based on the identified determination method.

(Example 5-3 of Method: Combination)

For example, Examples 5-1 and 5-2 of Method described above may be combined. For example, the terminal reports, by the UE capability, information indicating one or more determination methods supported by the terminal. The base station that has been reported identifies a determination method to be used among the one or more determination methods indicated by the UE capability, and performs RRC configuration based on the identified determination method (for example, notification of scaling factor-related information). The terminal may identify, based on the RRC configuration, a determination method to be used among the one or more determination methods supported by the terminal, and determine the scaling factor based on the identified determination method.

(Determination Method 6: Notification of UE Capability)

The terminal may report information on determination of the TBS in TBoMS by the UE capability. For example, the information to be reported by the UE capability may be information indicating capabilities of the terminal with respect to the determination of the TB S in TBoMS.
For example, the terminal may report information associated with determination methods 1 to 5 described above by the UE capability.
For example, the terminal may report, by the UE capability, information indicating applicability of at least one of determination methods 1 to 5 described above. Further, information indicating applicability of at least one example of the respective methods indicated in determination methods 1 to 5 described above may be reported by the UE capability. For example, applicability of each example of determination methods 1 to 5 may be reported or applicability of a plurality of methods (or examples of methods) may be reported collectively.
Further, the terminal may report, by the UE capability, the maximum value of the scaling factor. For example, the maximum value of the scaling factor may be the maximum value of the scaling factor supported by the terminal or may be the maximum value of the scaling factor that can be used by the terminal.
Further, the terminal may report, by the UE capability, information on frequencies to be supported by the terminal. The reporting method is not particularly limited. For example, the terminal may collectively report whether each frequency is supportable. In other words, the terminal may report whether the terminal is capable of performing the support as the terminal. Alternatively, the terminal may individually report whether each frequency is supportable. Illustratively, the terminal may individually report whether each of FR 1 and FR 2 is supportable. For example, the terminal may report, by the UE capability, information indicating that FR 1 is supportable and FR 2 is not supportable. Further, the terminal may report whether each SCS is supportable.
Note that, the terminal may report whether a frequency different from FR 1 and FR 2 is supportable. Further, at least one of FR 1 and FR 2 may be subdivided and it may be reported whether each of those subdivided is supportable by the terminal. For example, in a case where FR 2 is subdivided into sub-labeled frequencies, such as FR 2-1 and FR 2-2, it may be reported whether each of subdivided FR 2-1 and FR 2-2 is supportable by the terminal.
Further, the terminal may report, by the UE capability, information on a duplex scheme(s) (for example, TDD and/or FDD) to be supported by the terminal. For example, the terminal may collectively report whether each duplex scheme is supportable.
As described above, in the present embodiment, the scaling factor to be used for determination of the TBS in TBoMS can be determined to an appropriate value so that the TB in TBoMS can be determined to have an appropriate size. Further, the TB in TBoMS can be determined to have an appropriate size so that resource utilization efficiency can be improved.
Note that, the determination of the TBS in TBoMS transmission described above (for example, the determination of the scaling factor) is not limited to the example applied to the determination of the TBS in one TBoMS transmission, but may be applied, for example, to the determination of the TBS in TBoMS repeated transmissions. In other words, TBoMS may be combined with repeated transmissions as a method of transmitting one TB.
Hereinafter, TBoMS repeated transmissions will be described.

(Transmission Method 1)

For example, the terminal may perform TBoMS repeated transmissions. The TBoMS repeated transmissions may also be referred to, for example, "TBoMS with repetitions".

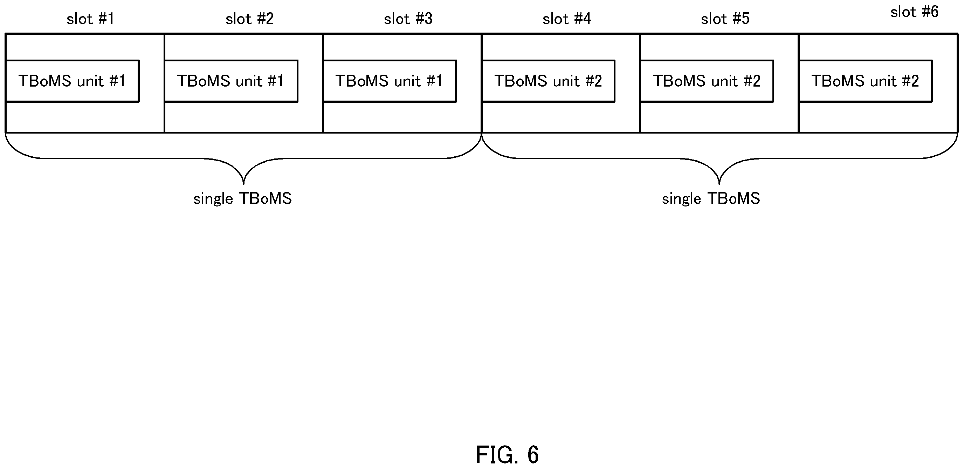

FIG. 6 illustrates an example of TBoMS repeated transmissions. FIG. 6 indicates an example of two TBoMS repeated transmissions in six slots of slots #1 to #6. For example, in slots #1 to #3 in FIG. 6, one TBoMS transmission (single TBoMS) is executed. Further, in slots #4 to #6, one TBoMS transmission is executed. Note that, in FIG. 6, the TBoMS block in one slot is indicated as a TBoMS unit. TBoMS units #1 and #2 indicate different TBoMS transmissions. Note that, TBoMS units #1 in slots #1 to #3 may correspond to pieces of information different from each other (for example, sequences). Further, TBoMS units #2 in slots #4 to #6 may correspond to pieces of information different from each other (for example, sequences).

The terminal may perform TBoMS repeated transmissions by using a plurality of slots. For example, the terminal may determine whether TBoMS repeated transmissions are performed in accordance with conditions described below.

(Condition 1)

The terminal supports TBoMS repeated transmissions.

(Condition 2)

TBoMS repeated transmissions are enabled by RRC configuration. Note that, this RRC configuration may be configured by, for example, a parameter of PUSCH-Config IE. For example, the application of TBoMS, the application of repeated transmissions, and the application of TBoMS repeated transmissions may be configured (designated) by the RRC configuration, respectively.

(Condition 3)

A row index in which both the number of repetitions and the number designated as the number of slots to which TBoMS allocation is performed, in a TDRA list are configured is designated. The designation of a row index in a TDRA list is performed by DCI, for example.

(Condition 4)

The number of repetitions is configured by RRC, and a row index in which the number designated as the number of slots to which TBoMS allocation is performed, in a TDRA list is configured is designated. The designation of a row index in a TDRA list is performed by DCI, for example. Note that, the number of repetitions in the TDRA list may not be configured in the row index to be designated here.

(Condition 5)

Both the number of repetitions and the number designated as the number of slots to which TBoMS allocation is performed are configured by RRC.

In a case where one of Conditions 1 to 5 described above is satisfied, the terminal may determine that TBoMS repeated transmissions are performed. Alternatively, in a case where two or more of Conditions 1 to 5 are satisfied, the terminal may determine that that TBoMS repeated transmissions are performed.

(Transmission Method 2: Bit Selection Method 1 of TBoMS repeated transmissions)

The terminal may execute continuous bit selection in bit selection of TBoMS repeated transmissions. For example, the starting point of the bit selection may be determined such that LDPC coded bit sequences are continuously subjected to the bit selection.

(Selection Method 1)

For example, the starting point of the bit selection in certain slot #n may be the position of the bit next to the last bit of the bit selection in a slot which is prior to slot #n and through which a PUSCH is transmitted.

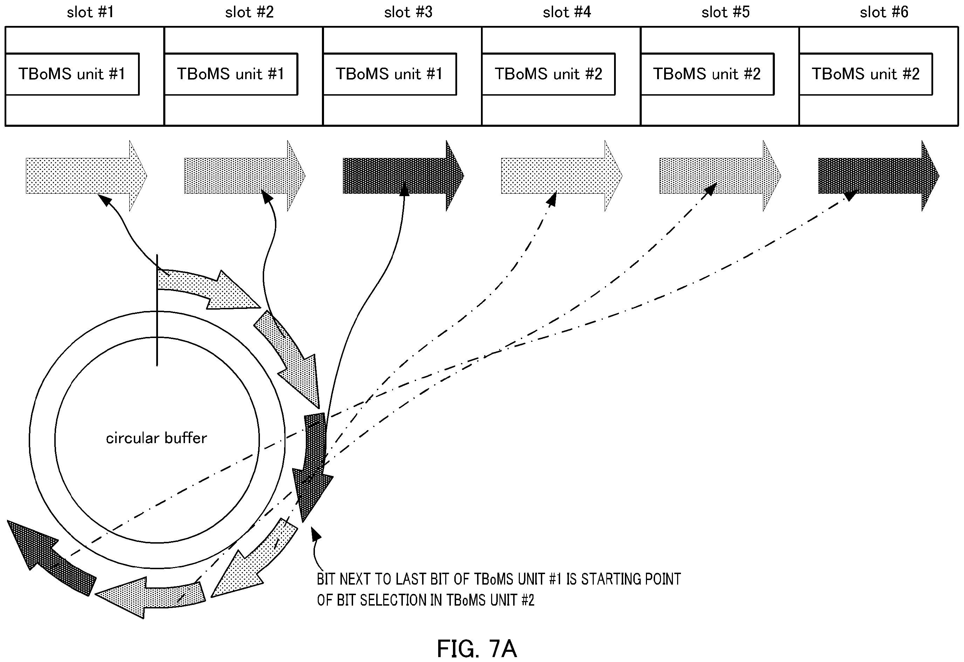

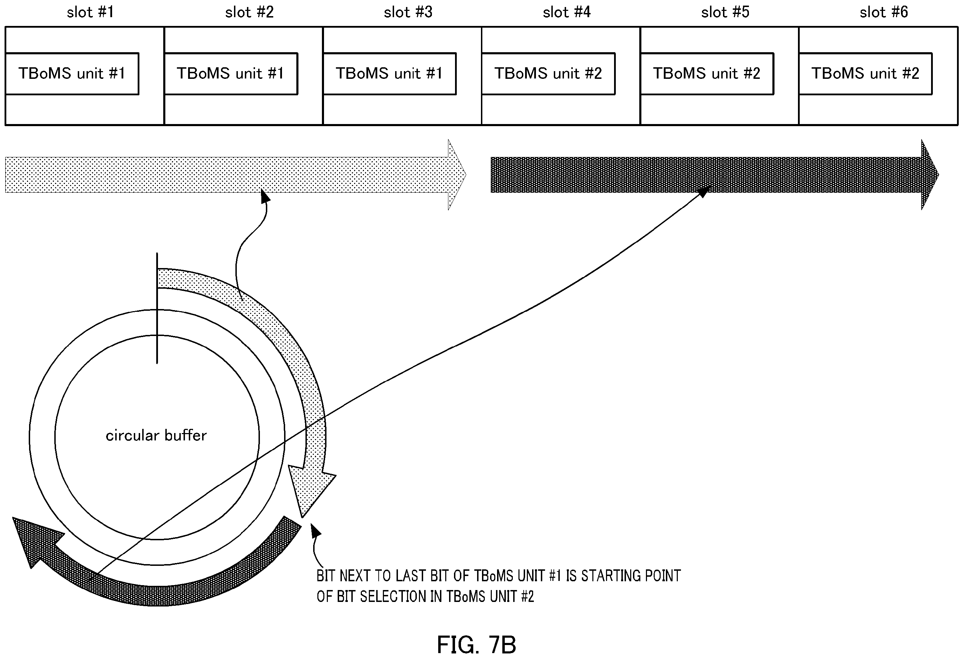

FIGS. 7A and 7B illustrate examples of bit selection of selection method 1 of transmission method 2. In the same manner as in FIG. 6, FIG. 7A and 7B indicate examples of two TBoMS repeated transmissions to be executed in slots #1 to #6. Further, FIGS. 7A and 7B indicate the relationship between bits to be transmitted in each slot and the positions of the bits in a circular buffer. Note that, the circular buffer may store a bit sequence corresponding to one TB.

Note that, the example of FIG. 7A indicates the bit selection when rate matching is executed in a slot unit, and the example of FIG. 7B indicates an example of the bit selection when rate matching is executed in one TBoMS unit (for example, in a plurality of slot units corresponding to one TBoMS).

For example, the starting point of the bit selection in slot #4 in FIGS. 7A and 7B is the position of the bit next to the last bit of the bit selection in slot #3 which is prior to slot #4 and through which a PUSCH is transmitted (TBoMS transmission is executed).

(Selection Method 2)

For example, the starting points of bit selections in each repeated transmission (each repetition) may be determined such that the starting points are at equal intervals.

For example, the starting point of the first repetition is determined in accordance with a RV (redundancy version). The starting point of repetition other than the first repetition may be determined based on a sequence length (hereinafter referred to as "specific sequence length") to be extracted in bit selection of a specific repetition. For example, the starting point of bit selection of a bit sequence to be transmitted in the k-th (where k is an integer of two or more and n or less, and n is the number of repetitions and an integer of two or more) repetition may be a position shifted from the starting point of bit selection of a bit sequence to be transmitted in the k-1-th repetition by the specific sequence length. In this case, the starting point of the bit selection is determined with intervals corresponding to the specific sequence length. In this case, the specific repetition may be the first repetition or may be a repetition in which a transmission bit sequence with the shortest sequence length is transmitted. Alternatively, the specific repetition in this case may be a repetition in which a transmission bit sequence with the longest sequence is transmitted. Further, the specific sequence length may be determined based on sequence lengths to be extracted in each bit selection of a plurality of repetitions. For example, the specific sequence length may be one of an average sequence length, the maximum sequence length, and the minimum sequence length of sequence lengths to be extracted in each bit selection of a plurality of repetitions.

(Transmission Method 3: Bit Selection Method 2 of TBoMS repeated transmissions)

In TBoMS repeated transmissions, the terminal may apply RV ids in each TBoMS transmission occasion based on a predetermined rule and/or a parameter configured by RRC.

For example, the terminal may apply a RV id in one TBoMS transmission occasion.

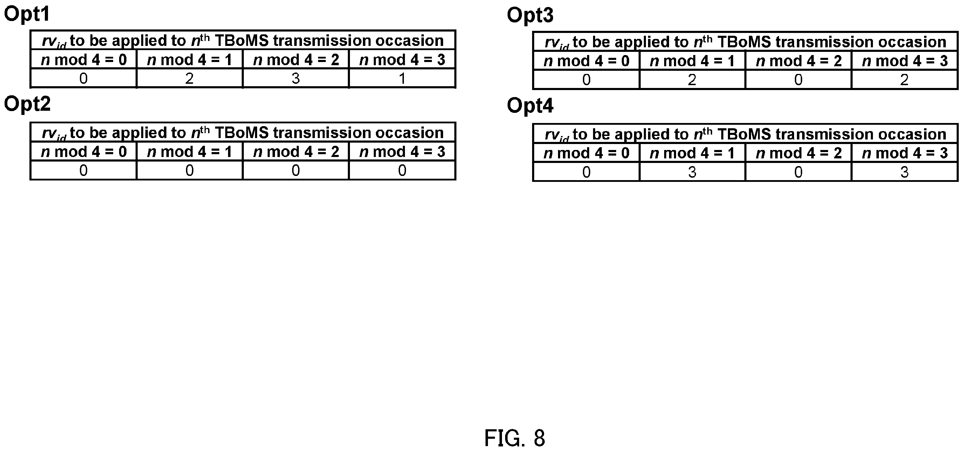

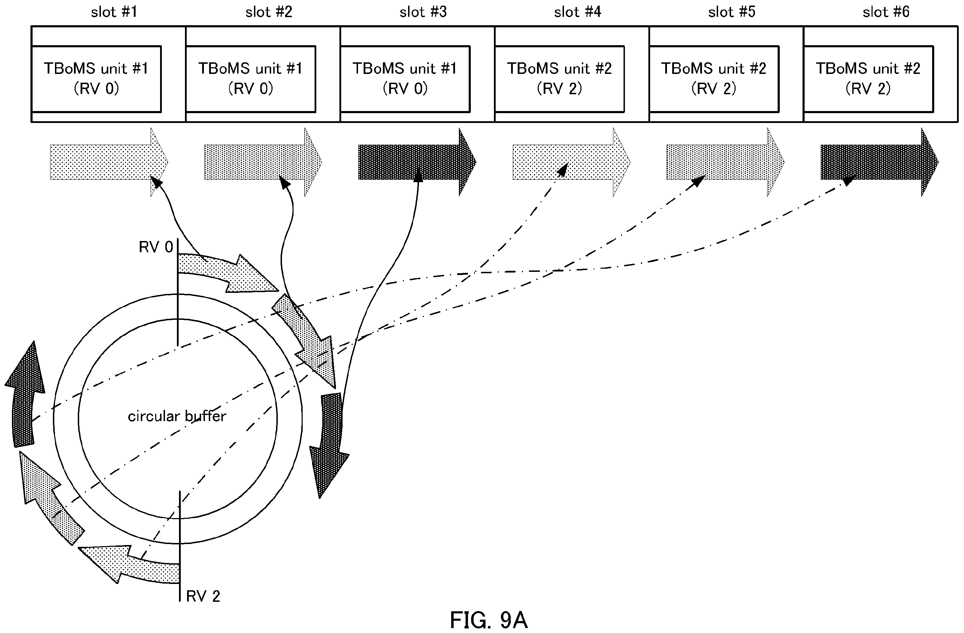

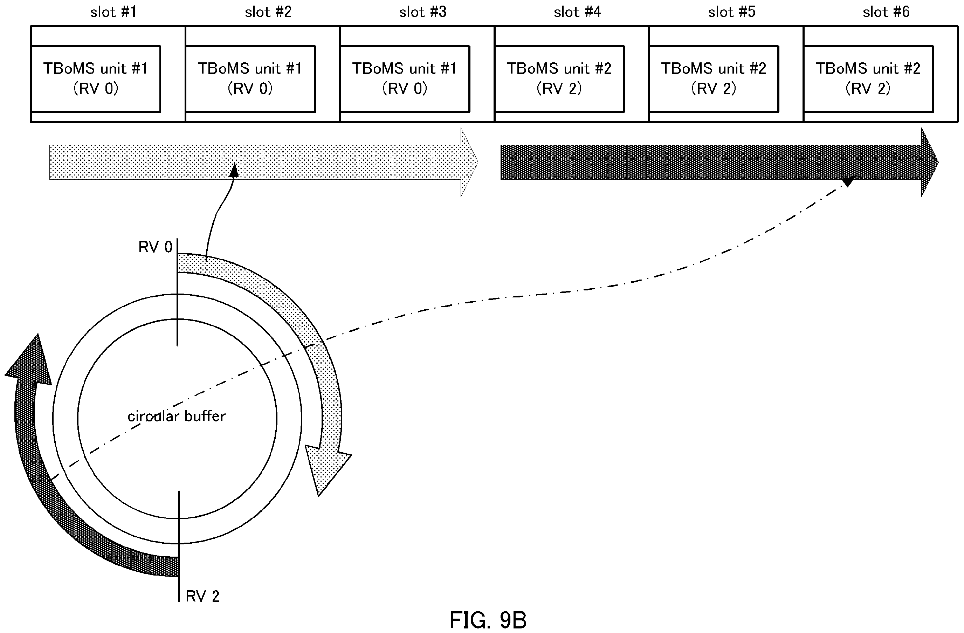

FIG. 8 illustrates examples of the relationship between a RV id and a TBoMS transmission occasion. FIG. 8 indicates examples of the respective relationships in Options 1 (Opt 1) to 4 (Opt 4). Note that, examples of the relationship between a RV id and a TBoMS transmission occasion is not limited to those. For example, in a case where Opt 1 in FIG. 8 is applied, each RV id in TBoMS follows in the order of 0, 2, 3, 1, 0, 2, .... FIG. 9A and 9B indicate examples in which each RV id in TBoMS is 0 or 2.

FIGS. 9A and 9B illustrate examples of bit selection of transmission method 3. In the same manner as in FIGS. 7A and 7B, FIGS. 9A and 9B indicate examples of two TBoMS repeated transmissions to be executed in slots #1 to #6. Further, FIGS. 9A and 9B indicate the relationship between bits to be transmitted in each slot and the positions of the bits in a circular buffer. Note that, the circular buffer may store a bit sequence corresponding to one TB.

Note that, the example of FIG. 9A indicates the bit selection when rate matching is executed in a slot unit, and the example of FIG. 9B indicates an example of the bit selection when rate matching is executed in one TBoMS unit (for example, in a plurality of slot units corresponding to one TBoMS).

For example, in FIGS. 9A and 9B, RV id = 0 in accordance with the first (n = 0 in FIG. 8) TBoMS transmission occasion is applied to slots #1 to #3 corresponding to the first TBoMS repeated transmission. Then RV id = 2 in accordance with the second (n = 1 in FIG. 8) TBoMS transmission occasion is applied to slots #4 to #6 corresponding to the second TBoMS repeated transmission.

(Transmission Method 4: RRC Configuration with respect to Rate Matching in TBoMS Repeated Transmissions)

In TBoMS repeated transmissions, the terminal may determine a determination method of RV ids in each TBoMS transmission occasion based on a predetermined rule and/or a parameter configured by RRC.

For example, the terminal determines which of transmission methods 2 and 3 with respect to TBoMS repeated transmissions is applied.

(Example 4-1 of Determination Method of Transmission Method: Determination in accordance with UE capability)

For example, the RV id determination method may be determined based on the UE capability. For example, in a case where the terminal supports the bit selection (for example, continuous bit selection over repetition) indicated in transmission method 2, the terminal may report, by the UE capability, information indicating that the terminal supports the bit selection indicated in transmission method 2. Then the terminal may determine the RV id based on the bit selection indicated in transmission method 2. Note that, in a case where the terminal does not support the bit selection indicated in transmission method 2, the terminal may apply the bit selection indicated in transmission method 3.

(Example 4-2 of Determination Method of Transmission Method: Determination in accordance with RRC configuration)

For example, the RV id determination method may be determined based on RRC configuration. For example, information (for example, a parameter) on a RV id determination method may be configured in PUSCH-Config IE. The information (for example, a parameter) on a RV id determination method may indicate at least one of the bit selection indicated in transmission method 2 and the method indicated in transmission method 3 which are described above. For example, the terminal may identify, based on the information on the RV id determination method, a method to be used, and may determine the RV id based on the identified information. For example, the method indicated in transmission method 3 may be applied in a case where the RV id to be used by the method indicated in transmission method 3 is configured by RRC, and the bit selection indicated in transmission method 2 may be applied in a case where the RV id is not configured by RRC.

(Example 4-3 of Determination Method of Transmission Method: Combination)

For example, Examples 4-1 and 4-2 described above may be combined. For example, the terminal reports, by the UE capability, one or more determination methods supported by the terminal. The base station that has been reported identifies a determination method to be used among the one or more determination methods indicated by the UE capability, and performs RRC configuration based on the identified determination method (for example, notification of information on a RV id determination method). The terminal may identify, based on the RRC configuration, a determination method to be used among the one or more determination methods supported by the terminal, and determine the RV id based on the identified determination method.

(Transmission Method 5: Notification of UE Capability)

The terminal may report, by the UE capability, information on TBoMS repeated transmissions. For example, the information reported by the UE capability may be information indicating capabilities of the terminal with respect to TBoMS repeated transmissions.

For example, the terminal may report, by the UE capability, information associated with transmission methods 1 to 5 for TBoMS repeated transmissions described above. For example, the following information may be reported by the UE capability.

For example, the terminal may report, by the UE capability, information indicating applicability of at least one of transmission methods 1 to 4 for TBoMS repeated transmissions described above. Further, information indicating applicability of at least one example of the respective methods indicated in transmission methods 1 to 4 for TBoMS repeated transmissions described above may be reported by the UE capability. For example, applicability of each example of transmission methods 1 to 4 for TBoMS repeated transmissions may be reported or applicability of a plurality of methods (or examples of methods) may be reported collectively.

Further, the terminal may report, by the UE capability, the maximum number of slots to which TBoMS allocation is performed. For example, the maximum number of slots to which TBoMS allocation is performed may be the maximum number of slots to which TBoMS allocation is performed, which is supported by the terminal, or may be the maximum number of slots to which TBoMS allocation is performed, which can be used by the terminal.

Further, in a case where TBoMS repeated transmissions are performed, the terminal may report, by the UE capability, the maximum number of the sum of slots to be allocated in the TBoMS repeated transmissions. For example, the maximum number of the sum of slots to be allocated in the TBoMS repeated transmissions may be the maximum number of the sum of slots to be allocated in the TBoMS repeated transmissions, which is supported by the terminal, or the maximum number of the sum of slots to be allocated in the TBoMS repeated transmissions, which can be used by the terminal.

Further, in a case where TBoMS repeated transmissions are performed, the terminal may report, by the UE capability, the maximum number of times of repeated transmissions. For example, the maximum number of times of the repeated transmissions may be the maximum number of times of the repeated transmissions, which is supported by the terminal, or the maximum number of times of the repeated transmissions, which can be used by the terminal.

Further, the terminal may report, by the UE capability, information on frequencies to be supported by the terminal. The reporting method is not particularly limited. For example, the terminal may collectively report whether each frequency is supportable. In other words, the terminal may report whether the terminal is capable of performing the support as the terminal. Alternatively, the terminal may individually report whether each frequency is supportable. Illustratively, the terminal may individually report whether each of FR 1 and FR 2 is supportable. For example, the terminal may report, by the UE capability, information indicating that FR 1 is supportable and FR 2 is not supportable. Further, the terminal may report whether each SCS is supportable.

Note that, the terminal may report whether a frequency different from FR 1 and FR 2 is supportable. Further, at least one of FR 1 and FR 2 may be subdivided and it may be reported whether each of those subdivided is supportable by the terminal. For example, in a case where FR 2 is subdivided into sub-labeled frequencies, such as FR 2-1 and FR 2-2, it may be reported whether each of subdivided FR 2-1 and FR 2-2 is supportable by the terminal.

Further, the terminal may report, by the UE capability, information on a duplex scheme(s) (for example, TDD and/or FDD) to be supported by the terminal. For example, the terminal may collectively report whether each duplex scheme is supportable.

As described above, in the present embodiment, TBoMS repeated transmissions can be executed so that data transmission efficiency can be improved. Further, TBoMS repeated transmissions can be executed so that coverage enhancement can be executed efficiently.

For example, in a case where an environment in which a gain is obtained by TBoMS and an environment in which a gain is obtained by repeated transmissions differ, the number designated as the number of slots to which TBoMS allocation is performed and the number of repetitions (repetition number) of repeated transmissions (repetitions) may be controlled in order to obtain the respective gains efficiently. For example, in the case of an environment in which a gain obtained by TBoMS is relatively large (for example, in a case where a desired data rate is relatively low), the number of repetitions may be reduced to increase the number designated as the number of slots to which TBoMS allocation is performed. Further, for example, in the case of an environment in which a gain obtained by repeated transmissions is relatively large (for example, in a case where a desired data rate is relatively high), the number of repetitions may be increased to reduce the number designated as the number of slots to which TBoMS allocation is performed. Such control makes it possible to efficiently obtain the respective gains of TBoMS and repeated transmissions. Note that, adjustment of the number designated as the number of slots to which TBoMS allocation is performed and the number of repetitions may be executed by the base station.

Note that, although an example in which TBoMS in PUSCH transmission is applied has been indicated in the embodiment described above, the present disclosure is not limited thereto. TBoMS may be applied to transmission of a channel different from a PUSCH. Alternatively, TBoMS may be applied to a combination of a plurality of channels. The same applies to TBoMS repeated transmissions. TBoMS repeated transmissions may be applied to transmission of a channel different form a PUSCH, and TBoMS repeated transmissions may be applied to transmission of a channel different from a PUSCH with respect to a combination of a plurality of channels.

Further, although an example in which TBoMS is applied to an uplink signal has been described in the embodiment described above, TBoMS may be applied to a downlink signal and TBoMS repeated transmission may be applied thereto.

Further, although the "slot" in the embodiment described above indicates an example of a time unit of a radio resource, the present disclosure is not limited thereto. The "slot" may be replaced with a term such as "mini-slot", "frame", "subframe", "interval", or "TTI".

Further, although the "transport block (TB)" in the embodiment described above indicates an example of a unit of a block of information, the present disclosure is not limited thereto. The "transport block" may be replaced with another term such as "information block", "packet", "codeword", "codeblock", "sequence", "coded sequence", or "subsequence".

(Hardware Configuration)

Note that, the block diagrams used to describe the above embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit" or "transmitter". The methods for implementing the functions are not limited specifically as described above.

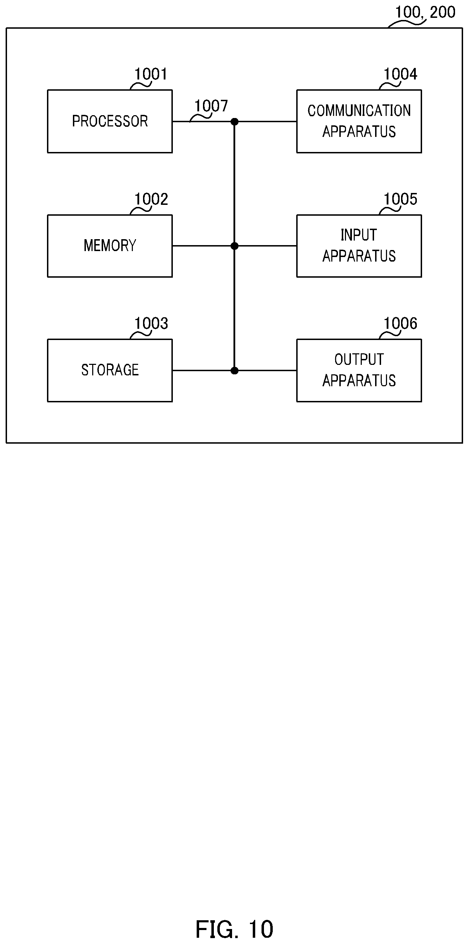

For example, the base station, the terminal, and the like according to an embodiment of the present disclosure may function as a computer that executes processing of a radio communication method of the present disclosure. FIG. 10 illustrates an example of hardware configurations of the base station and of the terminal according to an embodiment of the present disclosure. Base station 100 and terminal 200 described above may be physically constituted as a computer apparatus including processor 1001, memory 1002, storage 1003, communication apparatus 1004, input apparatus 1005, output apparatus 1006, bus 1007, and the like.

Note that, the term "apparatus" in the following description can be replaced with a circuit, a device, a unit, or the like. The hardware configurations of base station 100 and of terminal 200 may include one apparatus or a plurality of apparatuses illustrated in the drawings, or may not include part of the apparatuses.

The functions of base station 100 and terminal 200 are implemented by predetermined software (program) loaded into hardware such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103 and control section 203 as described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiment is used. For example, control section 103 of base station 100 or control section 203 of terminal 200 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented by one or more chips. Note that, the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be, for example, a database, a server or other appropriate media including at least one of memory 1002 and storage 1003.

Communication apparatus 1004 is hardware (transmission and reception device) for communication between computers through at least one of wired and wireless networks and is also called, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, and transmission section 202, and the like as described above may be realized by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that, input apparatus 1005 and output apparatus 1006 may be integrated (for example, a touch panel).

The apparatuses, such as processor 1001, memory 1002 and the like, are connected by bus 1007 for communication of information. Bus 1007 may be configured using one bus or using buses different between each pair of the apparatuses.

Furthermore, base station 100 and terminal 200 may include hardware, such as a microprocessor, a digital signal processor (DSP), an ASIC (Application Specific Integrated Circuit), a PLD (Programmable Logic Device), and an FPGA (Field Programmable Gate Array), and the hardware may implement part or all of the functional blocks. For example, processor 1001 may be implemented using at least one of these pieces of hardware.

(Notification and Signaling of Information)

The notification of information is not limited to the aspects/embodiment described in the present disclosure, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, notification information (MIB (Master Information Block) and SIB (System Information Block))), and other signals. The RRC signaling may be called an RRC message and may be, for example, an RRC connection setup message, an RRC connection reconfiguration message, or the like.

(Application System)

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA 2000, UMB (Ultra Mobile Broadband), IEEE 802.11 (Wi-Fi (registered trademark)), IEEE 802.16 (WiMAX (registered trademark)), IEEE 802.20, UMB (Ultra-WideBand), Bluetooth (registered trademark), or other appropriate systems and a next-generation system extended based on the above systems. Additionally or alternatively, a combination of two or more of the systems (e.g., a combination of at least one of LTE and LTE-A and 5G) may be applied.

(Processing Procedure and the like)

The orders of the processing procedures, the sequences, the flow charts, and the like of each aspect/embodiment described in the present disclosure may be changed as long as there is no contradiction. For example, elements of various steps are presented in exemplary orders in the methods described in the present disclosure, and the methods are not limited to the presented specific orders.

(Operation of Base Station)

Specific operations which are described in the present disclosure as being performed by the base station may sometimes be performed by a higher node (upper node) depending on the situation. Various operations performed for communication with a terminal in a network constituted by one network node or a plurality of network nodes including a base station can be obviously performed by at least one of the base station and a network node other than the base station (examples include, but not limited to, MME and S-GW). Although there is one network node in addition to the base station in the case illustrated above, a plurality of other network nodes may be combined (for example, MME and S-GW).

(Direction of Input and Output)

The information or the like (see the item of "Information and Signals") can be output from a higher layer (or a lower layer) to a lower layer (or a higher layer). The information or the like may be input and output through a plurality of network nodes.

(Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

(Determination Method)

The determination may be made based on a value expressed by one bit (0 or 1), based on a Boolean value (true or false), or based on comparison with a numerical value (for example, comparison with a predetermined value).

(Software)

Regardless of whether the software is called software, firmware, middleware, a microcode, or a hardware description language or by another name, the software should be broadly interpreted to mean instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

(Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that, the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

("System" and "Network")

The terms "system" and "network" used in the present disclosure can be interchangeably used.

(Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements can be identified by any suitable names, and various names allocated to these various channels and information elements are not limitative in any respect.

(Base Station (Wireless Base Station))

The terms "base station (BS)", "wireless base station", "fixed station", "NodeB", "eNodeB (eNB)", "gNodeB (gNB)", "access point", "transmission point", "reception point", "transmission/reception point", "cell", "sector", "cell group", "carrier", and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor (RRH: Remote Radio Head)). The term "cell" or "sector" denotes part or all of the coverage area of at least one of the base station and the base station subsystem that perform the communication service in the coverage.

(Terminal)

The terms "Mobile Station (MS)", "user terminal", "User Equipment (UE)", and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

(Base Station/Mobile Station)

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be IoT (Internet of Things) equipment such as a sensor.

The base station in the present disclosure may also be replaced with the user terminal. For example, each aspect/embodiment of the present disclosure may find application in a configuration that results from replacing communication between the base station and the user terminal with communication between multiple user terminals (such communication may, e.g., be referred to as D2D (Device-to-Device), V2X (Vehicle-to-Everything), or the like). In this case, terminal 200 may be configured to have the functions that base station 100 described above has. The wordings "uplink" and "downlink" may be replaced with a corresponding wording for inter-terminal communication (for example, "side"). For example, an uplink channel, a downlink channel, and the like may be replaced with a side channel.

Similarly, the terminal in the present disclosure may be replaced with the base station. In this case, base station 100 is configured to have the functions that terminal 200 described above has.

(Meaning and Interpretation of Terms)

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming", "expecting", "considering", and the like.

The terms "connected" and "coupled" as well as any modifications of the terms mean direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed". When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

(Reference Signal)

The reference signal can also be abbreviated to an RS and may also be called a pilot depending on the applied standard.

(Meaning of "Based On")

The description "based on" used in the present disclosure does not mean "based only on", unless otherwise specified. In other words, the description "based on" means both of "based only on" and "based at least on".

("First" and "Second")

Any reference to elements by using the terms "first", "second" and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

(Means)

The "section" in the configuration of each apparatus described above may be replaced with "means", "circuit", "device", or the like.

(Open Form)

In a case where terms "include", "including", and their modifications are used in the present disclosure, these terms are intended to be inclusive like the term "comprising". Further, the term "or" used in the present disclosure is not intended to be an exclusive or.

(Time Units such as TTI, Frequency Units such as RB, and Radio Frame Configuration)

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology indicates, for example, at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., OFDM (Orthogonal Frequency Division Multiplexing) symbol, SC-FDMA (Single Carrier-Frequency Division Multiple Access) symbol, or the like) in the time domain. The slot may also be a time unit based on the numerology.

The slot may include a plurality of mini-slots. Each of the mini slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini-slot, and the symbol indicate time units in transmitting signals. The radio frame, the subframe, the slot, the mini-slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot or the like instead of a subframe.

Here, the TTI, for example, refers to a minimum time unit for scheduling in wireless communication. For example, in an LTE system, the base station performs scheduling for allocating a radio resource (a frequency bandwidth, a transmit power, and the like that can be used in each user terminal) on the basis of TTI to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword or the like is actually mapped may be shorter than the TTI.

Note that, in a case where one slot or one mini-slot is referred to as the TTI, one or more TTIs (that is, one or more slots or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that, the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini-slot, one subframe, or one TTI. One TTI and one subframe may be constituted by one resource block or a plurality of resource blocks.

Note that, one or more RBs may be referred to as a Physical Resource Block (PRB: Physical RB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common RBs (common resource blocks) for certain numerology in a certain carrier. Here, the common RBs may be identified by RB indices that use a common reference point of the carrier as a reference. The PRB may be defined by a certain BWP and may be numbered within the BWP.

The BWP may include a BWP for UL (UL BWP) and a BWP for DL (DL BWP). An UE may be configured with one or more BWPs within one carrier.

At least one of the configured BWPs may be active, and the UE does not have to assume transmission/reception of a predetermined signal or channel outside the active BWP. Note that, "cell", "carrier" and the like in the present disclosure may be replaced with "BWP".

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

In a case where articles, such as "a", "an", and "the" in English, for example, are added in the present disclosure by translation, nouns following these articles may have the same meaning as used in the plural.

In the present disclosure, the expression "A and B are different" may mean that "A and B are different from each other". Note that, the expression may also mean that "A and B are different from C". The expressions "separated" and "coupled" may also be interpreted in the same manner as the expression "A and B are different".

<Variations and the like of Aspects>

The aspects and embodiment described in the present disclosure may be independently used, may be used in combination, or may be switched and used along the execution. Further, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiment described in the present disclosure. Modifications and variations of the aspects of the present disclosure can be made without departing from the spirit and the scope of the present disclosure defined by the description of the appended claims. Therefore, the description in the present disclosure is intended for exemplary description and does not limit the present disclosure in any sense.

Industrial Applicability

An aspect of the present disclosure is useful for a radio communication system.

Reference Signs List

10 Radio communication system
20 NG-RAN
100 Base station
200 Terminal
101, 202 Transmission section
102, 201 Reception section
103, 203 Control section

**Claims**

1. A terminal, comprising:

a control section that determines a first size of an information block to be transmitted in a transmission scheme, by multiplying a second size of the information block to be transmitted through a physical uplink shared channel in one time resource unit by a coefficient, the transmission scheme being a transmission scheme in which information is transmitted through the physical uplink shared channel over a plurality of the time resource units; and

a transmission section that transmits the information block having the first size in the plurality of time resource units.

2. The terminal according to claim 1, wherein the control section determines a number of the plurality of time resource units as the coefficient, the plurality of time resource units being allocated for being used in the transmission scheme.

3. The terminal according to claim 1, wherein the control section determines a number of the plurality of time resource units as the coefficient, the plurality of time resource units being usable in the transmission scheme.

4. The terminal according to claim 1, wherein the control section determines the coefficient based on control information according to the transmission scheme.

5. The terminal according to claim 4, wherein the control information is included in at least one of radio resource control (RRC), a media access control control element (MAC CE), and/or downlink control information (DCI).

6. A radio communication method, comprising:

determining a first size of an information block to be transmitted in a transmission scheme, by multiplying a second size of the information block to be transmitted through a physical uplink shared channel in one time resource unit by a coefficient, the transmission scheme being a transmission scheme in which information is transmitted through the physical uplink shared channel over a plurality of the time resource units; and transmitting the information block having the first size in the plurality of time resource units.

Type A repetition like TDRA

DCI | PUSCH | PUSCH | PUSCH

1 slot

Type B repetition like TDRA

DCI | PUSCH | PUSCH | PUSCH

1 slot

FIG. 1

EP 4 358 612 A1

FIG. 2

100

```
                                    ┌──────────────┐ 101
                                    │ TRANSMISSION │
                                    │   SECTION    │
                                    └──────────────┘
              103                   
        ┌──────────────┐           
        │   CONTROL    │           
        │   SECTION    │           
        └──────────────┘           ┌──────────────┐ 102
                                    │  RECEPTION   │
                                    │   SECTION    │
                                    └──────────────┘
```

FIG. 3

200

```
                                    ┌──────────────┐ 201
                                    │  RECEPTION   │
                                    │   SECTION    │
              203                   └──────────────┘
        ┌──────────────┐           
        │   CONTROL    │           
        │   SECTION    │           ┌──────────────┐ 202
        └──────────────┘           │ TRANSMISSION │
                                    │   SECTION    │
                                    └──────────────┘
```

FIG. 4

| slot #1 | slot #2 | slot #3 | slot #4 | slot #5 | slot #6 |
|---|---|---|---|---|---|
| DCI | | TBoMS #1 | TBoMS #2 | TBoMS #3 | TBoMS #4 |

FIG. 5

EP 4 358 612 A1

| slot #1 | slot #2 | slot #3 | slot #4 | slot #5 | slot #6 |
|---|---|---|---|---|---|
| TBoMS unit #1 | TBoMS unit #1 | TBoMS unit #1 | TBoMS unit #2 | TBoMS unit #2 | TBoMS unit #2 |

single TBoMS          single TBoMS

FIG. 6

EP 4 358 612 A1

| slot #1 | slot #2 | slot #3 | slot #4 | slot #5 | slot #6 |
|---------|---------|---------|---------|---------|---------|
| TBoMS unit #1 | TBoMS unit #1 | TBoMS unit #1 | TBoMS unit #2 | TBoMS unit #2 | TBoMS unit #2 |

circular buffer

BIT NEXT TO LAST BIT OF TBoMS UNIT #1 IS STARTING POINT
OF BIT SELECTION IN TBoMS UNIT #2

FIG. 7A

| slot #1 | slot #2 | slot #3 | slot #4 | slot #5 | slot #6 |
|---|---|---|---|---|---|
| TBoMS unit #1 | TBoMS unit #1 | TBoMS unit #1 | TBoMS unit #2 | TBoMS unit #2 | TBoMS unit #2 |

circular buffer

BIT NEXT TO LAST BIT OF TBoMS UNIT #1 IS STARTING POINT
OF BIT SELECTION IN TBoMS UNIT #2

FIG. 7B

## Opt1

| $rv_{id}$ to be applied to $n^{th}$ TBoMS transmission occasion | | | |
|---|---|---|---|
| $n$ mod 4 = 0 | $n$ mod 4 = 1 | $n$ mod 4 = 2 | $n$ mod 4 = 3 |
| 0 | 2 | 3 | 1 |

## Opt2

| $rv_{id}$ to be applied to $n^{th}$ TBoMS transmission occasion | | | |
|---|---|---|---|
| $n$ mod 4 = 0 | $n$ mod 4 = 1 | $n$ mod 4 = 2 | $n$ mod 4 = 3 |
| 0 | 0 | 0 | 0 |

## Opt3

| $rv_{id}$ to be applied to $n^{th}$ TBoMS transmission occasion | | | |
|---|---|---|---|
| $n$ mod 4 = 0 | $n$ mod 4 = 1 | $n$ mod 4 = 2 | $n$ mod 4 = 3 |
| 0 | 2 | 0 | 2 |

## Opt4

| $rv_{id}$ to be applied to $n^{th}$ TBoMS transmission occasion | | | |
|---|---|---|---|
| $n$ mod 4 = 0 | $n$ mod 4 = 1 | $n$ mod 4 = 2 | $n$ mod 4 = 3 |
| 0 | 3 | 0 | 3 |

FIG. 8

EP 4 358 612 A1

slot #1 | slot #2 | slot #3 | slot #4 | slot #5 | slot #6

TBoMS unit #1 (RV 0)

TBoMS unit #1 (RV 0)

TBoMS unit #1 (RV 0)

TBoMS unit #2 (RV 2)

TBoMS unit #2 (RV 2)

TBoMS unit #2 (RV 2)

circular buffer

RV 0

RV 2

FIG. 9A

| slot #1 | slot #2 | slot #3 | slot #4 | slot #5 | slot #6 |
|---------|---------|---------|---------|---------|---------|
| TBoMS unit #1 (RV 0) | TBoMS unit #1 (RV 0) | TBoMS unit #1 (RV 0) | TBoMS unit #2 (RV 2) | TBoMS unit #2 (RV 2) | TBoMS unit #2 (RV 2) |

RV 0

circular buffer

RV 2

FIG. 9B

100, 200

1001

PROCESSOR

1007

1004

COMMUNICATION
APPARATUS

1002

MEMORY

1005

INPUT
APPARATUS

1003

STORAGE

1006

OUTPUT
APPARATUS

FIG. 10

## INTERNATIONAL SEARCH REPORT

| International application No. |
| --- |
| **PCT/JP2021/023273** |

**A. CLASSIFICATION OF SUBJECT MATTER**

*H04W 72/04*(2009.01)i
FI: H04W72/04 131

According to International Patent Classification (IPC) or to both national classification and IPC

**B. FIELDS SEARCHED**

Minimum documentation searched (classification system followed by classification symbols)

H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | LG Electronics. Discussions on TB processing over multi-slot PUSCH [online], 3GPP TSG RAN WG1 #105-e R1-2105489, 27 May 2021<br>section 4 | 1-6 |

☐ Further documents are listed in the continuation of Box C.     ☐ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **12 January 2022** | **25 January 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New WID on NR coverage enhancements. *RP-202928, 3GPP TSG RAN meeting #90e, 3GPP,* December 2020

- RANI Chairman's Notes. *3GPP TSG RAN WG1 Meeting #104-e e-Meeting, 3GPP,* February 2021